(19) Europäisches Patentamt
European Patent Office
Office européen des brevets

(11) **EP 0 669 004 B1**

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(21) Anmeldenummer: **93924513.0**

(22) Anmeldetag: **11.11.1993**

(51) Int Cl.⁶: **G01S 7/52**

(86) Internationale Anmeldenummer:
**PCT/DE93/01077**

(87) Internationale Veröffentlichungsnummer:
**WO 94/11753 (26.05.1994 Gazette 1994/12)**

(54) **ULTRASCHALL-INSPEKTIONSVERFAHREN ZUR ERKENNUNG DREIDIMENSIONALER MUSTER**

ULTRASONIC INSPECTION PROCEDURE FOR THE DETECTION OF THREE-DIMENSIONAL PATTERNS

PROCEDE D'INSPECTION ULTRASONORE POUR DETECTER DES MODELES TRIDIMENSIONNELS

(84) Benannte Vertragsstaaten:
**CH DE FR GB IT LI**

(30) Priorität: **12.11.1992 DE 4238262**

(43) Veröffentlichungstag der Anmeldung:
**30.08.1995 Patentblatt 1995/35**

(73) Patentinhaber: **SIEMENS AKTIENGESELLSCHAFT**
**80333 München (DE)**

(72) Erfinder:
- **VOSSIEK, Martin**
  **D-59075 Hamm (DE)**
- **ECCARDT, Peter-Christian**
  **D-85521 Ottobrunn (DE)**
- **KRÖMER, Nils**
  **D-09337 Hohenstein-Ernstthal (DE)**
- **MAGORI, Valentin**
  **D-81539 München (DE)**

(56) Entgegenhaltungen:
**US-A- 4 847 817**

- **SENSORS AND ACTUATORS A Bd. A31, Nr. 1/3 , März 1992 , LAUSANNE CH Seiten 182 - 187 XP276425 J.M. MARTIN ET AL. 'Ultrasonic echoes from complex surfaces: an application to object recognition' in der Anmeldung erwähnt**
- **TECHNISCHES MESSEN TM Bd. 55, Nr. 10 , 1988 , MUNCHEN DE Seiten 367 - 376 XP66412 K.E. BIEHL ET AL. 'Ultraschall-Systeme für die industrielle Objekterfassung und -klassifizierung'**
- **TREIZIEME COLLOQUE SUR LE TRAITEMENT DU SIGNAL ET DES IMAGES 16. September 1991 , JUAN-LES-PINS, FR Seiten 645 - 648 XP242858 G.B. DE NATALE ET AL. 'Processing and interpretation of submarine acoustic images'**

**Beschreibung**

Luftultraschallsensorsysteme sind wegen ihrer guten Tiefenauflösung und kostengünstigen Realisierbarkeit in vielen Bereichen der Robotik, der Montage- und Handhabungstechnik sowie in der Qualitätssicherung einsetzbar. Um neben den etablierten Systemen zur Abstandsmessung oder Prasenzdetektion weitere Anwendungen in Richtung einer Muster- oder Fehlererkennung zu erschließen, sind außer geeigenten Luftultraschallwandlern leistungsfähige Algorithmen notwendig, die mit vertretbarem Rechenaufwand zu verwirklichen und leicht an die jeweilige Umgebung adaptierbar sind. Die grundlegende Aufgabe solcher "intelligenten Sensorsysteme" besteht darin, Meßdaten aus einem interessierenden Bereich zu erfassen, relevante Großen aus den Meßdaten zu extrahieren und die gewonnenen Größen einem Merkmalsraum oder einer Skala nach geeigneten Regeln zuzuordnen. Es handelt sich also im weitesten Sinn um ein Mustererkennungsproblem, bei dem ein Meßdatenraum in einen Klassenzugehörigkeitsraum transformiert wird. In der Qualitassicherung besteht ein typisches Ziel dieser Transformation in der Entscheidung, ob eine Situation oder ein Objekt einer bestimmten Norm entspricht oder nicht.

Im Bereich der Luftultraschalltechnik existiert ein Verfahren, das einen solchen Situationsvergleich mit Hilfe eines objektselektiven inversen Filters durchführt [1]. Hierbei wird zu einem eingelernten Referenzobjekt das inverse Signal berechnet, das dann im folgenden als Sendesignal dient, so daß die Gleichheit von Norm- und Testobjekt durch ein optimal kurzes Empfangssignal angezeigt wird. Die Auswertung des Empfangsechoprofils erfolgt anhand einfacher Kriterien, wie z.B. dem Verhältnis von Signalspitze zu Pulsbreite. Mit diesen einfachen Kriterien kann nicht auf die Ursache eine Situationsdifferenz geschlossen werden. Zudem ist die Analyse äußerst empfindlich gegen zeitliche Änderungen (Driften) des Meßsystems, so daß man das Normsignal häufig aktualisieren muß, um eine hohe Situationsselektivität bzw. Meßgenauigkeit zu gewährleisten.

Für die Robotik wurde ein Ultraschallsystem entwickelt, das aus einem einfachen Monosensor besteht, der im Impuls- Echo- Betrieb arbeitet [2]. Die Sende- /Empfangseinheit befindet sich senkrecht über dem zu untersuchenden Objekt. Zur Erkennung des Objekts wird ein Set von gespeicherten Referenzobjektinformationen mit dem Testobjekt korreliert. Der Korrelationsindex entscheidet, ob ein Zusammenhang zwischen dem Referenzobjekt und dem Testobjekt vorliegt. Es wird eine off-line Analyse des empfangenen Signals durchgeführt. Der Untergrund muß stark absorbierendes Material aufweisen, da sonst das Echo des Untergrunds das Echo des Objekts überstrahlt.

Aus [3] und [4] sind Luftultraschallsysteme zur Abstandsmessung und Prasenzdetektion bekannt. Diese basieren auf der Auswertung von Schallaufzeiten oder Echoprofilformen, z.B. durch einfachen Vergleich der Partialechos. Die Messung der Schallaufzeiten erfolgt z.B. durch Komparatoren, die anzeigen, wann im Empfangssignal bestimmte Schwellwerte überschritten werden.

Bekannt sind Verfahren, die durch Senden einer Folge von Frequenzen objektspezifische Reflexionsspektren aufzeichnen und vergleichen [5], wobei das Ergebnis des Vergleichs lediglich binär bewertet wird, so daß differenzierte Situationsbewertungen nicht möglich sind. Ein weiterer Nachteil ist die relativ große Zeitdauer zur Aufzeichnung der Reflexionsspektren, da die einzelnen Frequenzen nacheinander gesendet werden.

In jüngster Zeit ist ein zunehmendes Interesse an Konzepten der Fuzzy-Logik zu beobachten. Obgleich das Interesse maßgeblich auf regelungstechnische Anwendungen ausgerichtet ist, liefert die Fuzzy-Logik darüber hinaus auch im Bereich der Signalverärbeitung bzw. der Mustererkennung sehr interessante Möglichkeiten [6], da sich mit ihr komplexe Systeme und Entscheidungsprozesse durch einfache linguistische Variablen beschreiben lassen.

Aus dem Dokument US 4 847 817 ist ein Breitbandsonarsignalprozessor und Objekterkennungssystem bekannt. Ein von einem Ultraschallwandler in Richtung des zu erkennenden Objekts ausgesendetes Ultraschallsignal wird an diesem reflektiert und zu einem Empfangswandler zurückgeworfen. Vom empfangenen Signal wird die Hüllkurve gebildet und die Amplituden und die Zeitpunkte des Auftretens eines jeden Maximas der Hüllkurve bestimmt. Die Zeitpunkte des Auftretens und die Amplituden der Maxima werden mit eingelernten Zeitpunkten und Amplituden verglichen, um die Ähnlichkeit des zu erkennenden Objektes mit einem bekannten Objekt festzustellen. Nachteilhafterweise stellt dieses Objekterkennungssystem keine Information über die Lage des zu erkennenden Objektes zur Verfügung.

Allen bisherigen einfachen nicht bildgebenden Verfahren ist gemeinsam, daß nur sehr einfache Kriterien für die Echoauswertung herangezogen werden, mit denen nur sehr begrenzte Aussagen über eine beobachtete Situation getroffen werden können.

Aufgabe der Erfindung ist es, ein Ultraschallinspektionsverfahren anzugeben, das sich durch gute Objektselektivität, hohe Meßsicherheit und Unempfindlichkeit gegen Drifterscheinungen auszeichnet.

Die Aufgabe wird durch ein Verfahren gemäß dem Patentanspruch 1 gelöst.

Vorteilhafte Weiterbildungen der Erfindung sind durch die in den Unteransprüchen angegebenen Merkmale gekennzeichnet.

Das Verfahren zeichnet sich durch eine gute Objektselektivität, hohe Meßsicherheit und eine vereinfachte Signalverarbeitung bei gleichzeitiger besserer Nutzung der Signalinformationen aus. Anwendungsgebiete des Verfahrens liegen im Bereich der Montage- und Handhabungstechnik, in der Qualitätssicherung und in der Werkstoffprüfung. Insbesondere werden preiswerte objekt- und situationsselektive Ultraschallmeßsysteme ermöglicht, die sich sehr leicht an unterschiedliche Applikationen anpassen lassen.

Die Erfindung wird im folgenden anhand der Zeichnungen erläutert.

Die Figur 1 zeigt ein Ausführungsbeispiel des Meßaufbaus.

Die Figur 2 zeigt eine Simulation des Schallfelds im Bereich des Wandler-Fokus-Punkts.

Die Figur 3 zeigt Beispiele für verschiedene Testsituationen.

Die Figur 4 zeigt eine S-förmige Gewichtungsfunktion.

Die Figur 5 zeigt Korrelationsmerkmale als Fuzzy-Variablen.

Die Figur 6 zeigt den Ablaufplan der Signalauswertung.

Figur 7 zeigt die Fuzzy-Syntax zur Interpretation von Situationsdifferenzen.

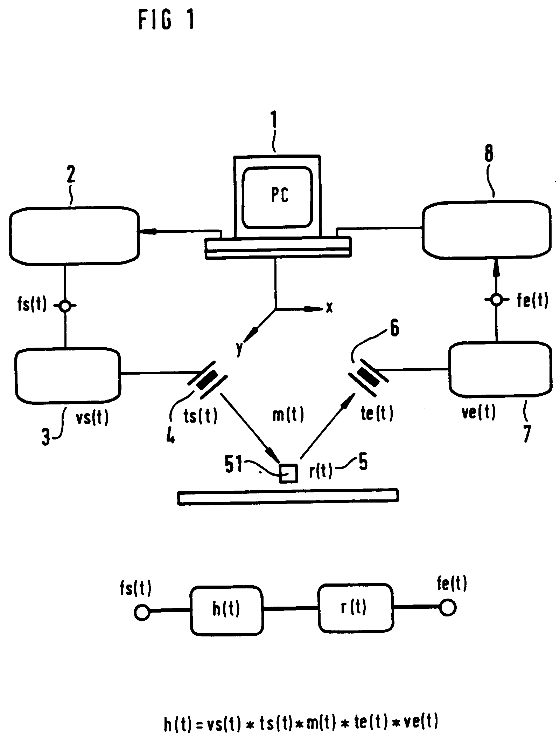

Den grundlegenden Aufbau des Meßsystems zeigt Figur 1. Ein von einem Rechner 1 gesteuerter Wellenformgenerator 2 speist über einen Leistungsverstärker 3 den Sendewandler 4 mit einem beliebig vorgebbaren, 16 Bit quantisierten Anregungssignal. Das so erzeugte Ultraschallsignal breitet sich in einem durch das Wandlerrichtverhalten vorgegebenen Raumbereich aus und wird an der vorhandenen Objektszene 5 reflektiert. Aufgrund der nahezu vollständigen Reflexion ergibt sich die Form des Echosignals maßgeblich aus der Oberflächenstruktur des Objekts 51. Bei Objektabmessungen in der Größenordnung der Schallwellenlänge treten Interferenzerscheinungen bzw. Streureflexionen auf. Die Schallsignale, die vom Objekt in Richtung des Empfangswandlers 6 reflektiert werden, wandelt dieser in elektrische Signale, die über den Empfangsverstärker 7 mit einem Transientenrekorder 8 aufgezeichnet und zur weiteren Verarbeitung zum Rechner 1 übertragen werden. Zur Untersuchung räumlich ausgedehnter Bereiche werden die Ultraschallwandler 4 und 6 mit einem rechnergesteuerten Schrittmotor in x/y-Richtung positioniert. Statt einer aufwendigen 3D - Datenverarbeitung erfolgen Datenaufnahme und Signalverarbeitung für jeden Meßpunkt getrennt. Der damit verbundene Verzicht auf Information ist bei der vorliegenden Anwendung sinnvoll, da ein reines Inspektionssystem und kein bildgebendes Konzept angestrebt wird.

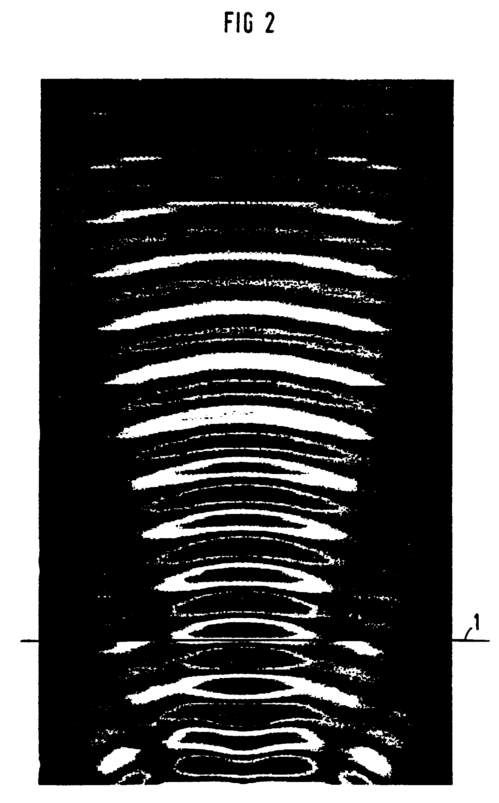

Bei den verwendeten Luftultraschallwandlern handelt es sich um piezokeramische Radial-Dickenschwinger mit einer Mittenfrequenz von ca. 250 kHz und einer 3 dB Bandbreite von ca. 90 kHz. Eine Simulation des Schallfeldes im Bereich des Wandler-Fokus-Punkts ist in Figur 2 dargestellt. Die Objektebene 1 wurde bei der Aufnahme so gewählt, daß sie ungefähr im Fokusbereich 2 liegt. Der 3dB Fokusdurchmesser beträgt etwa 4 mm.

Das Übertragungsverhalten des gesamten Systems, also die Antwort $f_e$ (t) des Systems auf das Sendesignal $f_s$ (t) ergibt sich durch die Faltung der Impulsantworten der Teilkomponeten:

$$f_e(t) = f_s(t) * h(t) * r(t), \qquad mit\ h(t) = v_s(t) * t_s(t) * m(t) * v_e(t) * t_e(t). \qquad (I)$$

$f_s(t)$:     Sendesignal

$v_s(t)$ :     Leistungsverstärker

$t_s(t)$:     Sendewandler

$m(t)$ :     Ausbreitungsmedium

$t_e(t)$:     Empfangswandler

$v_e(t)$ :     Empfangsverstärker

$f_e(t)$:     Empfangssignal

$r(t)$:     Objektreflektivität

$h(t)$:     Gesamtsystem

In den Frequenzbereich transformiert lautet die Systemgleichung I:

$$F_e(\omega) = Fs(\omega) \cdot H(\omega) \cdot R(\omega). \qquad (II)$$

Es handelt sich hierbei um ein vereinfachtes, eindimensionales Modell. Das Empfangssignal $f_e(t)$ zu einem bestimmten Zeitpunkt $t_i$ ergibt sich aus der räumlichen Integration über alle Reflektoren, die sich auf der zu $t_i$ gehörigen Wellenfront des Wandlerschallfeldes befinden (vgl. Figur 2).

Der Effekt der lateralen Informationsintegration ist für bildgebende Verfahren störend, weil er die laterale Auflösung begrenzt und den menschlichen Seh- und damit Auswertegewohnheiten entgegenläuft. Ultraschallsysteme besitzen jedoch eine sehr gute Tiefenauflösung. Es ist daher gerade bei Ultraschall-Inspektionssystemen sinnvoll, primär axiale Informationen auszuwerten, und nicht den Weg über ein aufwendiges bildgebendes Verfahren zu beschreiten. Das empfangene Zeitsignal liefert aufgrund der Signalintegration in lateraler Richtung Informationen über einen ausgedehnten Raumbereich. In diesem reduzierten Datensatz sind räumliche Informationen vorhanden, aber nicht mehr direkt zugänglich. Die Aufgabe des Verfahrens besteht nun darin, die Objektszene anhand des eindimensionalen Empfangssignals $f_e(t)$ zu klassifizieren bzw. zu überwachen.

Die einfachste Möglichkeit, eine räumliche Situation anhand eindimensionaler Ultraschallsignale zu analysieren, besteht darin, das Signal einer Soll-Situation mit dem Signal der zu prüfenden Situation zu vergleichen. Hierbei liefert die Kreuzkorrelationfunktion aussagefähige und gut interpretierbare Merkmale, mit deren Hilfe man eine Ultraschallsignaldifferenz und damit eine Abweichung von einer Sollsituation feststellen kann.

Als Kreuzkorrelationfunktion $\rho_{xy}(t_1, t_2)$ bezeichnet man das gemittelte Produkt der Amplitudenwerte der beiden Signale $x(t_1)$ zum Zeitpunkt $t_1$ und $y(t_2)$ zum Zeitpunkt $t_2$. Handelt es sich bei x und y um stationäre Prozesse, so hängt $\rho_{xy}(t_1, t_2)$ nur von der Zeitdifferenz $\tau = t_2 - t_1$ ab.

$$\rho_{xy}(\tau) = \overline{x(t)^* \cdot y(t+\tau)} = \lim_{T \to \infty} \frac{1}{2 \cdot T} \int_{-T}^{T} x(t)^* \cdot y(t+\tau)dt \qquad (\text{* konjugiert komplex}) \qquad (\text{III})$$

Die Kreuzkorrelationfunktion (KKF) gibt an, in welchem Maß sich die beiden Signale x und y in Abhängigkeit von der Zeitverschiebung $\tau$ ähneln. Falls x und y bis auf einen konstanten Faktor identisch sind, nimmt die KKF den maximalen Wert an. Man spricht in diesem Fall von vollständiger Korrelation. Sind die Signale völlig unabhängig (unkorreliert), wie z.B. zwei getrennte Rauschprozesse, so ist die KKF identisch Null. Für den Sonderfall, daß x und y denselben Prozeß darstellen, wird $\rho(\tau)$ als Autokorrelationsfunktion (AKF) bezeichnet. Das Maximum der AKF liegt bei $\tau = 0$. Die AKF ist in diesem Punkt symmetrisch und eine gerade Funktion. Sind x und y identische Prozesse, die aber um eine bestimmte Zeit $\Delta t$ gegeneinander verschoben sind, so verschiebt sich der Symmetriepunkt bzw. das Maximum ebenfalls um die Zeit $\Delta t$. Das Maximum der AKF, $\rho(\tau)$ bei $\tau = 0$, stellt den quadratischen Signalmittelwert und somit ein Maß für die Signalleistung dar. Die KKF bzw. AKF werden häufig auf diesen Wert normiert benutzt, wobei sich der Normierungsfaktor aus dem quadratischen Mittelwert der Leistungen beider miteinander korrelierten Signale ergibt.

$$\rho_{normxy}(\tau) = \frac{\rho_{xy}(\tau)}{\sqrt{\rho_{xx}(0) \cdot \rho_{yy}(0)}} \; , \qquad \text{mit } |\rho_{normxy}(\tau)| \leq 1 \qquad (IV)$$

Wie aus der vorangegangenen Beschreibung ersichtlich, liefert die Kreuzkorrelationfunktion eine Reihe von physikalisch interpretierbaren Merkmalen, welche Aussagen über die Ähnlichkeit zweier Signale zulassen. Die im folgenden verwendeten Merkmale für den angestrebten Vergleich der reflektierten Luftultraschallsignale eines Normobjekts mit denen eines Prüflings sind erfindungsgemäß:

1. Die Abweichung $\rho$ des Maximums der normierten KKF $\rho_{normxy}(\tau)$ vom Wert 1 liefert ein Maß für die Formähnlichkeit der Signale unabhängig von Laufzeitunterschieden und Signalleistung.

2. Die Asymmetrie $\alpha$ der KKF $\rho_{xy}(\tau)$ um die Position ihres Maximums beschreibt wie bei Punkt 1) die Ähnlichkeit der Signalform. Als Maß für die Asymmetrie wird hier das Verhältnis der quadratischen Mittelwerte rechts und links vom Maximum herangezogen.

3. Die Lage des Maximums der KKF $\rho_{xy}(\tau)$ hängt (bei vergleichbaren Signalformen) direkt vom Laufzeitunterschied $\tau$ der korrelierenden Signale ab.

4. Die Maxima der Autokorrelationsfunktionen $\rho_{xx}(0)$ und $\rho_{yy}(0)$ vom Norm- und Prüfsignal ergeben ein Maß für die übertragenen Signalleistungen bzw. deren Differenzen $\varepsilon$.

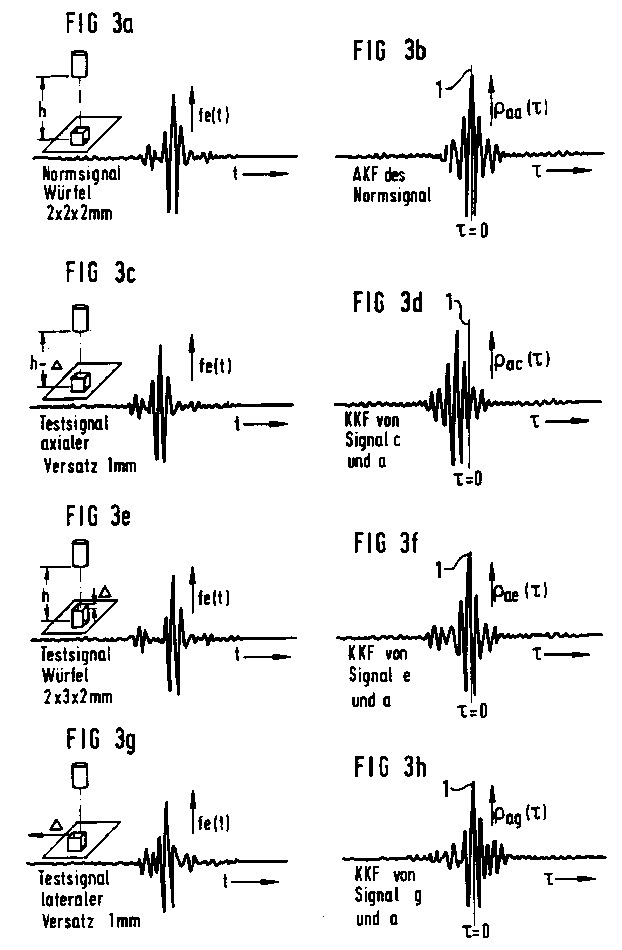

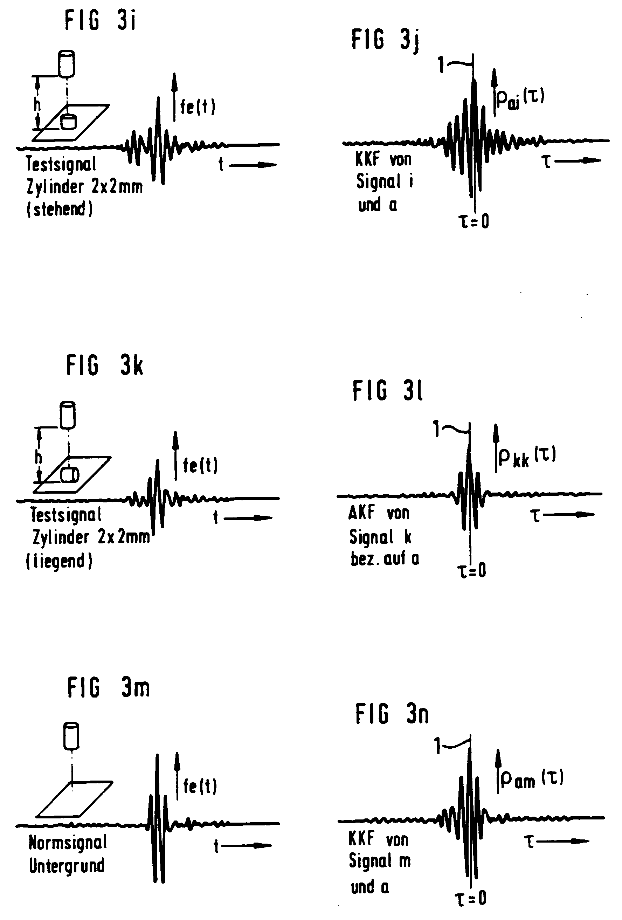

5. Die Lage und Höhe der Nebenmaxima liefern eine Aussage über die Struktur des Objekts und über die Anzahl der im Beobachtungsraum sich befindlichen Objekte. Eine kürzere Signallaufzeit bewirkt, daß die Nebenmaxima bzw. die Hüllkurve nach links verschoben wird (vgl. Fig. 3e, f). Daraus läßt sich schließen, daß Teile der Objektszene sich näher am Wandler befinden als in der Normsituation. Wie in Fig. 3g, h zu erkennen ist, bewirkt ein lateraler Versatz vom Wandler weg, daß die Nebenmaxima für Laufzeiten $\tau > 0$ deutlich höher als in der Normsituation sind. Entsprechend dazu sind die Nebenmaxima für Laufzeiten $\tau < 0$ merklich niedriger.

Ein grundsätzliches Problem beim Signalvergleich entsteht, wenn sich die Übertragungseigenschaften des Systems mit der Zeit langsam ändern. Diese beispielsweise von Schwankungen durch Luftfeuchtigkeit und Temperatur hervorgerufenen Änderungen sind insbesondere dann von Bedeutung, wenn die Zeitpunkte der Signalaufnahmen von Norm und Prüfling weit auseinander liegen. Begegnet wird diesem Problem durch die Berechnung einer angepaßten Anregungsfunktion, die die Systemübertragungseigenschaften und somit auch deren Änderungen kompensiert [7]. Von jedem Meßzylus wird die Impulsantwort gemessen, die sich bei einem ebenen Untergrund (mit $R(\omega) = 1$) ergibt, um anschließend ein Sendesignal zu berechnen, das der inversen System-Impulsantwort entspricht. Da reelle Systeme bandbegrenzt sind und rauschen, kann die Invertierung der gemessenen Impulsantwort leicht instabil werden. Um dies zu verhindern, werden die Bereiche des Spektrums mit einer Gewichtsfunktion $G(\omega)$ z.B. mit einem modifizierten von-Hann-Fenster unterdrückt, in denen die Signalanteile klein gegenüber dem Rauschen sind. Ausgehend von Gleichung II ergibt sich mit

$$F_s(\omega) = G(\omega) \cdot H(\omega)^{-1} : F_e(\omega) = G(\omega) \cdot R(\omega).$$

Das Empfangssignal und somit auch die extrahierten Merkmale sind dann nur noch von der Objektfunktion und nicht mehr von der Übertragungseigenschaften abhängig. Das Empfangssignal des Normreflektors, bei angepaßtem Sendesignal, also die Fensterfunktion, gibt darüber hinaus über die anschließende Auswertung ein gutes Vergleichsignal dafür ab, ob sich überhaupt ein Objekt auf dem ebenen Untergrund befindet. Vergleiche dazu die Figuren 3m und 3n. Es besteht die Möglichkeit während längerer Meßreihen die Kompensation adaptiv nachzuführen, was dadurch erreicht wird, daß bei einer Meßsituation, bei der sicher erkannt wird, daß sie der Normsituation entspricht, ein neu angepaßtes Sendesignal berechnet wird.

Die obengenannten Korrelationsmerkmale 1 bis 4 sollen anhand einiger Signalbeispiele veranschaulicht werden. Die Meßsituation entspricht der in Figur 1 dargestellten. Figur 3a zeigt das empfangene Zeitsignal $f_e(t)$, das ein 2 x 2 x 2 mm großer, auf einem ebenen Untergrund liegender Würfel liefert. Dieses Signal, dessen AKF $\rho_{xx}(\tau)$ Figur 3b zeigt, stellt im folgenden die Normsituation (Referenzobjektszene) dar, mit der die Testsignale $f_e(t)$ verglichen werden. Im ersten Vergleich (Figur 3c und 3d) wird die gleiche Situation wie bei der Norm dargeboten, nur die Entfernung zwischen Wandler und Objekt wird um 1 mm vergrößert. In der KKF $\rho_{xy}(\tau)$ von Norm- (= reflektiertes Referenzobjektszenenschallsignal) und Prüfsignal (= reflektiertes Objektszenenschallsignal) (Figur 3d) spiegelt sich dieser Laufzeitunterschied in Form einer seitlichen Verschiebung des Maximums wieder. Erhöht man dagegen den Würfel um 1mm (Figure 3e), so tritt keine Verschiebung des Maxiums, sondern nur eine Deformation in der KKF (Figur 3f) auf, da der Hauptsignalanteil vom Untergrundecho und nicht vom Würfel herrührt. Es führt also nur ein großes, axial versetztes Bauteil zu einer Verschiebung des Maximums.

Wird der Würfel um 1 mm zur Seite versetzt (vgl.Figur 3g), so ergibt die veränderte Reflexionsbedingung eine andere Signalenergie. Man sieht in Figur 3h, daß das Maximum der KKF deutlich vom Wert 1 abweicht, und daß die KKF nicht symmetrisch um den Punkt des Maximums ist. Ähnliche Verhältnisse stellen sich in der Figur 3i und 3j dar. Hier wird ein aufrecht stehender Zylinder (Stirnfläche in Reflexionrichtung) anstatt des Würfels als Testobjekt verwendet. Da die reflektierte Zylinderstirnfläche der des Würfels recht ähnlich ist, treten nur kleine Merkmalsänderungen in der KKF (Figur 3j) auf. Legt man den Zylinder auf die Seite, so wird das Signal sehr stark zu den Seiten gestreut. Der Energieverlust im empfangenen Testsignal ist am Maximum seiner AKF (Figur 3l) deutlich zu erkennen. Figur 3m zeigt das Echo des ebenen Untergrunds. In der KKF mit dem Signal des Normwürfels (Figur 3n) ist die große Situationsdifferenz deutlich zu erkennen. Die Situationsdifferenz berechnet den mit Hilfe der Korrelationsmerkmale erkennbaren Unterschied zwischen Norm und Prüfling.

Anhand der dargestellten Situationen mit den zugehörigen Signalen wird deutlich, daß sich unterschiedliche Situationsdifferenzen spezifisch in den gewählten Merkmalen der Korrelationfunktion widerspiegeln. Die Probleme bei der Interpretation dieser Merkmale bestehen darin, daß zum einen die Merkmalswerte aufgrund von Störungen wie Rauschen oder Luftbewegungen mit einer gewissen Unsicherheit behaftet sind,und daß zum anderen die absolute Größe der Merkmale von der jeweiligen Meßsituation, also z.B. von den verwendeten Wandlern und Signalen oder von der Größe der Objekte abhängt. Zwischen der Größe der Fehlermerkmale und der Größe der Situationsdifferenz besteht zwar in etwa ein linearer Zusammenhang, die Art des Fehlers läßt sich dagegen zumeist nicht so einfach klassifizieren.

Am Beispiel des axialen Versatzes, der sich bei großen und kleinen Bauteilen unterschiedlich auswirkt, wird deutlich, daß eine Zuordnung der Fehlerart nur unter Berücksichtigung bestimmter Charakteristika bzw. Regeln möglich ist. Für das anzuwendende Auswerteverfahren ist daher zu fordern, daß die genannnten Probleme berücksichtigt oder zumindest toleriert werden und daß es sich flexibel und leicht an veränderte Bedingungen anpassen läßt.

Aufgrund des Prinzips der Unschärfe, der Möglichkeit größere Bereiche bestimmter Meßgrößen miteinander zu vergleichen, wegen der Robustheit und der Adaptierbarkeit, bieten sich die Konzepte der Fuzzy-Logik als elegante Möglichkeit zur Auswertung der Ultraschallmeßgrößen an.

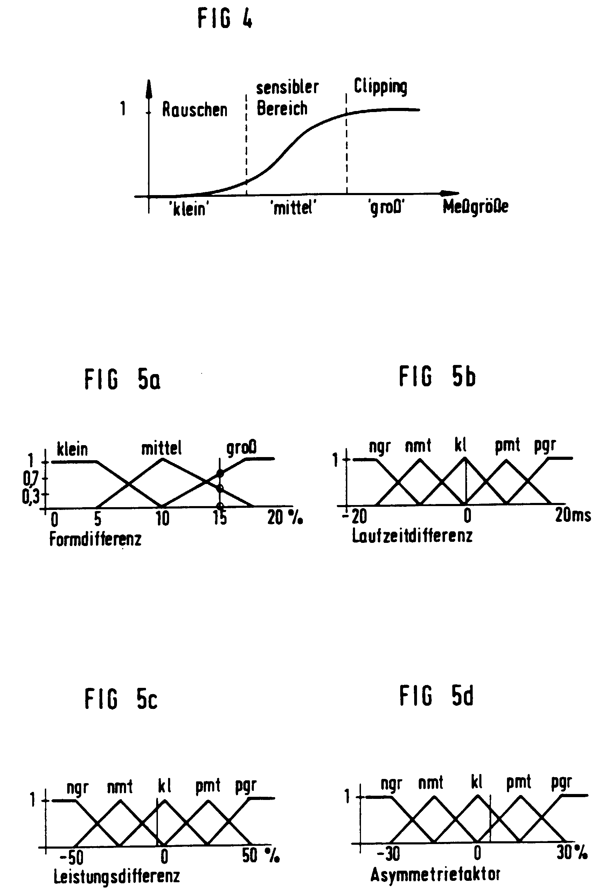

Als Eingangsgrößen des Fuzzy-Algorithmus stehen die acht Merkmale der Korrelationsanalyse zur Verfügung, die sich aus den Vergleichen des Testsignals des Testobjekts (= reflektiertes Objektszenenschallsignal) mit dem Normsignal des Normwürfels (= reflektiertes Referenzobjektszenenschallsignal) ($\rho_n$, $\alpha_n$, $\tau_n$, $\varepsilon_n$) und dem des Normunter-grunds ($\rho_u$, $\alpha_u$, $\tau_u$, $\varepsilon_u$) ergeben. Im ersten Schritt werden diese Merkmale fuzzifiziert, d.h. linguistischen Variablen zugeordnet. Die Fuzzy-Variable "Formdifferenz", die die Abweichung des normierten Korrelationsmaximums vom Wert 1 ausdrückt, unterteilt sich in die Klassen (Fuzzy-Sets) "klein", "mittel" und "groß". Diesen Klassen wird das extrahierte Merkmal mit bestimmten Zugehörigsgraden zugeordnet. Die Festlegung der Grenzen der Fuzzy-Sets wird an.zwei einfachen Randbedingungen ausgerichtet. Ein Fehlermerkmal gilt als "klein", wenn es sich im Bereich seiner Meßungenauigkeiten oder statistischen Schwankungen befindet. Der linguistische Begriff "groß" gilt dann als voll erfüllt, wenn das Fehlermerkmal so groß ist, daß von ihm eine Situationsdifferenz mit absoluter Sicherheit angezeigt wird. Im Prinzip ähnelt die Zuordnung einer S-förmigen Gewichtsfunktion, wie sie in Figur 4 dargestellt ist.

Betrachtet man als Beispiel das Echosignal des 1 mm zu hohen Würfels aus Figur 3e, so wird die Formdifferenz (hier 15% ) in diesem Fall mit einem Zugehörigkeitsgrad von 30% als mittel, zu 70% als groß und zu 0 % als klein bewertet (Figur 5a). Die übrigen Fehlermerkmale, "Asymmetrie", "Energiedifferenz" und "Laufzeitunterschied" (Figur 5b bis 5d) werden maßgeblich als klein eingestuft.

Vorteilhaft an Fuzzy-Variablen ist, daß sie für eine Größe unmittelbar ein Ebenbild im Intervall [0...1] liefern. Hierdurch wird eine Kombination bzw. ein Vergleich der Größen deutlich vereinfacht. Ein weiterer Vorteil besteht darin, daß große Meßwertbereiche in wenige Klassenzugehörigkeitsgrade übersetzt werden, so daß die Anzahl, der bei der Auswertung zu berücksichtigenden Größen stark reduziert wird.

Die eigentliche Auswertung der Eingangsgrößen, die Inferenz, arbeitet die Auswertungsregeln ab. Eine Regel beschreibt Zusammenhänge zwischen Fuzzy-Eingangs-und Ausgangsvariablen. Es wurden beispielsweise fünf Ausgangsvariablen definiert, um die vorliegenden Meßsituationen zu beschreiben.

1. Die Variable "Situationsdifferenz" liefert die übergeordnete Fehlerbewertung mit der Aussage, ob Norm und Prüfling gleich sind.

2. Die Variable "Struktur" beschreibt die Abweichung der Oberflächenstruktur des Prüflings von der glatten Oberfläche des Untergrunds (unabhängig von Energie und Laufzeitunterschieden).

3. Die Variable "axialer Fehler" beschreibt Höhenunterschiede zwischen Norm und Prüfling.

4. Die Variable "lateraler Fehler" beschreibt die Wahrscheinlichkeit, daß eine Situationsdifferenz durch seitliche Kantenverschiebung verursacht wird.

5. Die Fuzzy-Variable "Bauteil fehlt" gibt an, ob sich überhaupt ein Objekt auf dem Untergrund befindet.

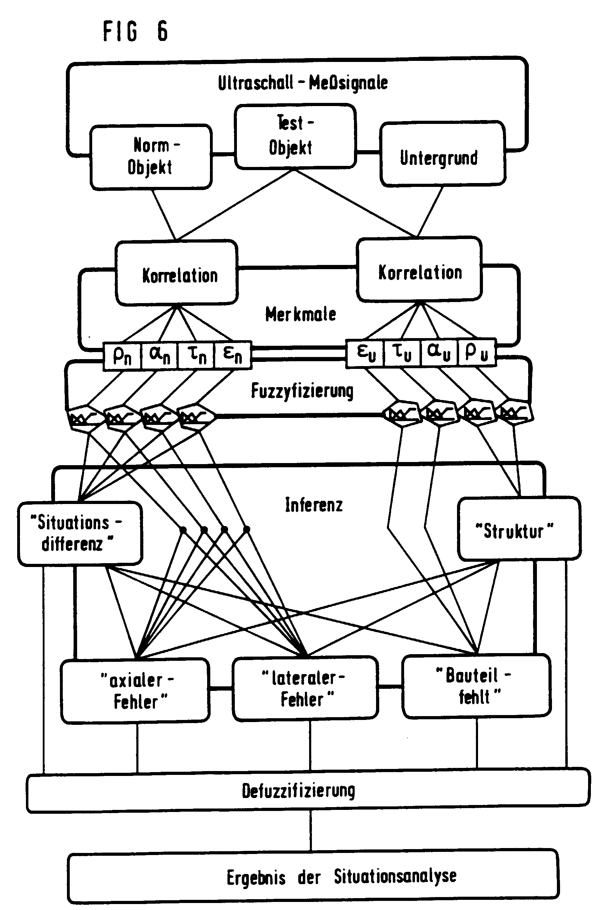

Das gesamte Zusammenwirken der Eingangs- und Ausgangsgrößen ist in Figur 6 dargestellt.

Die Inferenz unterteilt sich in zwei Stufen. In der ersten werden die Größe der Situationsdifferenz und die Beschaffenheit der Oberflächenstruktur bestimmt. Mit diesen Größen und den Korrelationsmerkmalen läßt sich dann die Fehlerart klassifizieren. Die Fuzzy-Variablen "Situationsdifferenz" und "Struktur" stellen die Größen für einige Grundregeln dar. Beispiele für die Grundregeln sind:

Eine Fehlerklassifikation ist dann sinnvoll, wenn auch eine signifikante Situationsdifferenz vorliegt.

Eine laterale Kantenverschiebung kann dann detektiert werden, wenn der Wert der Variablen "Struktur" nicht klein ist.

Für die Aussage "Bauteil fehlt", ist ein geringer Wert der Variable "Struktur" Voraussetzung.

Anhand der Signalbeispiele zum axialen Versatz (Figur 3c bis f) sollen nun einige weitere Regeln und das Prinzip der Auswertung erläutert werden. Wie schon dargestellt wurde, wirkt sich ein Höhenunterschied bei großen und kleinen Bauteilen unterschiedlich aus. Im Beispiel Figur 3c, d haben alle Korrelationsmerkmale bis auf den Laufzeitunterschied den Wert "klein". Da der Laufzeitunterschied zu einer signifikanten Situationsdifferenz führt, kann sicher auf einen axialen Versatz geschlossen werden. Komplizierter ist der in Figur 3e, f dargestellte Fall. Hier führt der 1 mm zu hohe Würfel nicht zu einer Lageveränderung des Korrelationsmaximums, sondern nur zu einer deutlichen Formdifferenz. Nun ist es aber sowohl für große als auch für kleine Bauteile charakteristisch, daß sich die empfangene Signalenergie in Abhängigkeit von einem nicht zu großen axial Versatz kaum ändert. Dieser Effekt ist dadurch zu erklären, daß die reflektierenden Flächen bei einer reinen Höhendifferenz gleich groß bleiben und sich in der gleichen lateralen Position im Schallfeld befinden. Dem gegenüber bewirkt die laterale Kantenverschiebung in aller Regel eine starke Asymmetrie und Energiedifferenz (vgl. Figur 3g, h). Da nun bei dem vorliegenden Beispiel ein stark strukturiertes Objekt (Objekt mit Kanten) vorliegt, also eine signifikante Situationsdifferenz besteht, die Energiedifferenz und die Asymmetrie aber klein sind, handelt es sich mit großer Wahrscheinlichkeit um einen Fehler, der durch einen Höhenunterschied zwischen Normbauteil und Prüfling hervorgerufen wird.

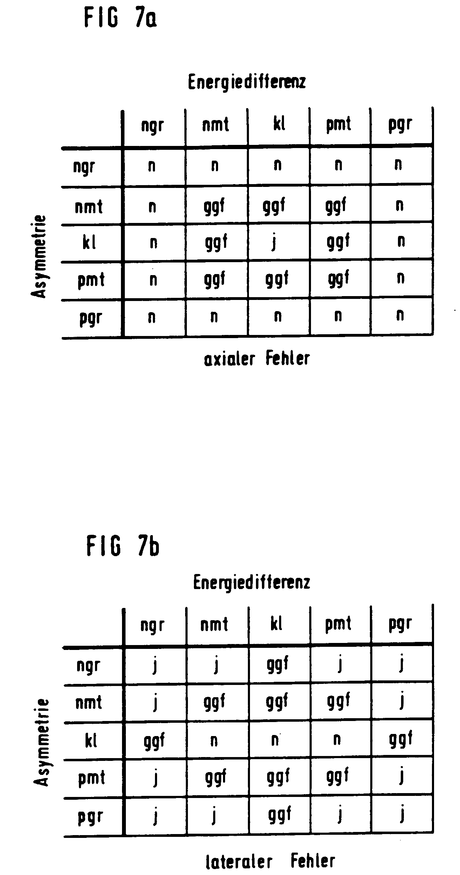

Als Beispiel einer Fuzzy-Syntax zur Interpretion von Situationsdifferenzen sei hier beschrieben, wie sich unter der Voraussetzung, daß die Laufzeitdifferenz klein, die Formdifferenz groß und die Struktur groß sind, die Ausgangsvariablen axialer (Fig. 7a) bzw. lateraler Fehler (Fig. 7b) in Abhängigkeit der Größen Asymmetrie bzw. Energiedifferenz ergeben. So ist ein axialer Fehler (Fig. 7a) nur dann sehr wahrscheinlich, (durch ein "j" in der Matrix gekennzeichnet), wenn die Asymmetrie und die Energiedifferenz klein (k1) sind. Im Gegensatz dazu machen eine negativ mittlere (nmt), kleine (k1) oder positiv mittlere (pmt) Energiedifferenz und eine kleine (k1) Asymmetrie einen lateralen Fehler (Fig. 7b) eher unwahrscheinlich (durch ein "n" in der Matrix gekennzeichnet). Sind die Energiedifferenz und die Asymmetrie negativ mittel (nmt) oder positiv mittel (pmt), so sind beide Fehlerarten ähnlich wahrscheinlich (durch ein "ggf" in der Matrix gekennzeichnet).

Aus vergleichbaren Überlegungen lassen sich weitere Regeln ableiten. Sehr positiv wirkt sich bei der Entwicklung und Formulierung der Regeln aus, daß die durch die Korrelation extrahierten Merkmale physikalisch interpretierbar sind und sich somit eine Reihe von Regeln unmittelbar aus physikalischen Gegebenheiten ergeben und nur wenige aufgrund von Beobachtungen und Erfahrungen abgeleitet werden müssen. Die Fuzzy-Variablen und die Regeln werden in einer Datei oder einem EPROM gespeichert oder einem EPROM und vor Beginn der Messung ausgelesen. Auf diese Weise lassen sich die Regeln und Klassengrenzen sehr leicht an veränderte Aufnahmebedingungen oder Applikationen anpassen.

Im letzten Auswertungsschritt werden die unscharfen Ausgangsgrößen defuzzifiziert, d.h. alle mit ihrem Zugehörigkeitsgrad gewichteten Klassen einer Ausgangsgröße werden zu einer resultierenden Zugehörigkeitsfunktion zusammengefaßt, aus der dann ein numerischer, scharfer Wert abgeleitet wird. Im vorliegenden Fall wurde der Schwerpunkt der durch die resultierende Zugehörigkeitsfunktion eingeschlossenen Fläche als Ausgabewert herangezogen. Dieser Wert repräsentiert die Wahrscheinlichkeit, mit der das Ergebnis der Situationsanalyse erfüllt ist. An dieser Stelle ist wieder eine scharfe Schwelle anzusetzen, ab der man die Analyse für glaubhaft hält.

Ein Ausführungsbeispiel der Hardware sieht wie folgt aus. Die Ultraschallwandler befinden sich in einer "Side-Looking"-Anordnung zu dem Untergrund, auf dem sich die Objekte befinden, um so zu verhindern, daß die Nutzechos vom Objekt durch das Untergrundecho überstrahlt werden (Fig. 1). Der Neigungswinkel wird so eingestellt, daß sich Objekteigenschaften optimal in den Merkmalen widerspiegeln. Analog dazu läßt sich der Abstand zwischen Wandler und Untergrund wählen, wobei der optimale Abstand etwa der Fokuslänge der verwendeten Wandler entspricht.

Weitere Anwendungsgebiete des Ultraschallinspektionsverfahrens zur dreidimensionalen Mustererkennung können beispielsweise eine Platinenbestückungskontrolle oder eine Güterinspektion auf Förderbändern sein. Die Platinenbestückungskontrolle liefert eine Auflösung von ca. 0,3 mm. Dieser Wert liegt im Bereich einer viertel Wellenlänge des Schallsignals und ist um den Faktor 15 besser als die mit dem benutzten Wandler erreichbare Bildauflösung.

Literatur

(1) Ermert, H.; Schmolke, J.;Weth, G.: An Adaptive Sensor for Object Identifikation. Proc. of IEEE 1986 Ultrasonic Symposium, S.555-558

(2) J.M. Martin Abreu et al.: Ultrasonic echoes from complex surfaces: an application to object recognition. Sensors and Actuators, 31, 1992, S. 182-187

(3) Mágori, V.: Ultraschall-Distanzsensoren zur Objektidentifizierung und Lageerkennung. VDI-Berichte 509 (1984), S. 27-31

(4) Mágori, V.; Walker, H.: Ultrasonic presence sensors with wide range and high local resolution, IEEE Trans. on Ultrasonics, Ferroelectrics and Frequency Control UFFC-34 (1987) H. 2, S. 202-211

(5) DE 37 102 39 A1

(6) Thomason, M.G.: Finite Fuzzy Automata, Regular Fuzzy Languages, and Pattern Recognition. Pattern Recognition, Vol. 5, 1973, S. 383-390

(7) Schmolke, J.; Hillfer, D.; Ermert, H.; Schafer, J.O.; Gräbner, G.: Generation of optimal input signals for ultrasound pulse-echo systems. Proc. of IEEE Ultrasonics-Symposium, 1982, S. 929-934

**Patentansprüche**

1. Verfahren zur Klassifikation einer Objektszene unter Verwendung von Ultraschall,

   - bei dem eine Referenzobjektszene beschallt wird,
   - bei dem eine Objektszene beschallt wird,

- bei dem ein an der Referenzobjektszene reflektiertes Referenzobjektszenenschallsignal mit einem an der Objektszene reflektierten Objektszenenschallsignal korreliert wird, was eine erste Korrelationsfunktion ($\rho_{xy}(\tau)$) liefert,
- bei dem anhand von wenigstens zwei Merkmalen, die die erste Korrelationsfunktion ($\rho_{xy}(\tau)$) charakterisieren, die Klassifikation der Objektszene erfolgt.

2.  Verfahren nach Anspruch 1,
    bei dem eines der Merkmale die Abweichung das Maximums der normierten ersten Korrelationsfunktion ($\rho_{xy}(\tau)$) vom Wert 1 ist.

3.  Verfahren nach Anspruch 1 oder 2,
    bei dem eines der Merkmale die Lage des Maximums der ersten Korrelationsfunktion ($\rho_{xy}(\tau)$) ist.

4.  Verfahren nach einem der Ansprüche 1 bis 3,
    bei dem eines der Merkmale die Asymmetrie der ersten Korrelationsfunktion ($\rho_{xy}(\tau)$) ist.

5.  Verfahren nach einem der Ansprüche 1 bis 4,

    - bei dem das an der Referenzobjektszene reflektierte Referenzobjektszenenschallsignal mit sich selbst korreliert wird, was eine zweite Korrelationsfunktion ($\rho_{xy}(\tau)$) liefert, und
    - bei dem das an der Objektszene reflektierte Objektszenenschallsignal mit sich selbst korreliert wird, was eine dritte Korrelationsfunktion ($\rho_{xy}(\tau)$) liefert, und
    - bei dem zur Klassifikation das Verhältnis der Maxima der zweiten und der dritten Korrelationsfunktion ($\rho_{xx}(\tau)$), ($\rho_{yy}(\tau)$) verwendet wird.

6.  Verfahren nach einem der Ansprüche 1 - 5,
    bei dem die Merkmale mittels einer Fuzzy-Logik verknüpft sind.


## Claims

1.  Method for classifying an object scene by using ultrasound,

    - in which a reference object scene is irradiated with ultrasound,
    - in which an object scene is irradiated with ultrasound,
    - in which a reference object scene sonic signal, reflected from the reference object scene, is correlated with an object scene sonic signal reflected from the object scene, which provides a first correlation function ($\rho_{xy}(\tau)$),
    - in which the object scene is classified with the aid of at least two features which characterize the first correlation function ($\rho_{xy}(\tau)$).

2.  Method according to Claim 1, in which one of the features is the deviation of the maximum in the normalized first correlation function ($\rho_{xy}(\tau)$) from 1.

3.  Method according to Claim 1 or 2, in which one of the features is the position of the maximum in the first correlation function ($\rho_{xy}(\tau)$).

4.  Method according to one of Claims 1 to 3, in which one of the features is the asymmetry of the first correlation function ($\rho_{xy}(\tau)$).

5.  Method according to one of Claims 1 to 4,

    - in which the reference object scene sonic signal reflected from the reference object scene is autocorrelated, which provides a second correlation function ($\rho_{xx}(\tau)$), and
    - in which the object scene sonic signal reflected from the object scene is autocorrelated, which provides a third correlation function ($\rho_{yy}(\tau)$), and
    - in which the ratio of the maxima of the second and third correlation functions ($\rho_{xx}(\tau)$, $\rho_{yy}(\tau)$) is used for the classification.

**6.** Method according to one of Claims 1-5, in which the features are interrelated using fuzzy logic.

**Revendications**

**1.** Procédé pour classer une image d'objet en utilisant des ultrasons,

- dans lequel on expose à l'action des ultrasons un modèle d'objet de référence,
- dans lequel on expose à l'action des ultrasons un modèle d'objet,
- dans lequel on corrèle un signal sonore de modèle d'objet de référence réfléchi sur le modèle d'objet de référence à un signal sonore de modèle d'objet réfléchi sur le modèle d'objet, ce qui fournit une première fonction de corrélation ($\rho_{xy}(\tau)$),
- dans lequel on effectue le classement du modèle d'objet à l'aide d'au moins deux caractéristiques qui caractérisent la première fonction de corrélation ($\rho_{xy}(\tau)$).

**2.** Procédé suivant la revendication 1,
dans lequel une des caractéristiques est l'écart par rapport à la valeur 1 du maximum de la première fonction de corrélation ($\rho_{xy}(\tau)$) normée.

**3.** Procédé suivant la revendication 1 ou 2, dans lequel une des caractéristiques est la position du maximum de la première fonction de corrélation ($\rho_{xy}(\tau)$).

**4.** Procédé suivant l'une des revendications 1 à 3, dans lequel une des caractéristiques est la dissymétrie du maximum de la première fonction de corrélation ($\rho_{xy}(\tau)$).

**5.** Procédé suivant l'une des revendications 1 à 4,

- dans lequel on corrèle le signal sonore de modèle d'objet de référence réfléchi sur le modèle d'objet de référence à lui-même, ce qui fournit une deuxième fonction de corrélation ($\rho_{xx}(\tau)$), et
- dans lequel on corrèle le signal sonore de modèle d'objet réfléchi sur le modèle d'objet à lui-même, ce qui fournit une troisième fonction de corrélation ($\rho_{yy}(\tau)$), et
- dans lequel on utilise pour le classement le rapport des maximums de la deuxième ($\rho_{xx}(\tau)$) et de la troisième ($\rho_{yy}(\tau)$) fonctions de corrélation.

**6.** Procédé suivant l'une des revendications 1 à 5, dans lequel les caractéristiques sont combinées au moyen d'une logique floue.

# FIG 1

$$h(t) = vs(t) * ts(t) * m(t) * te(t) * ve(t)$$

FIG 2

FIG 3a

$f_e(t)$

t ———

Normsignal
Würfel
2x2x2mm

FIG 3b

1

$\rho_{aa}(\tau)$

τ ———

AKF des
Normsignal

$\tau = 0$

FIG 3c

$h - \Delta$

$f_e(t)$

t ———

Testsignal
axialer
Versatz 1mm

FIG 3d

1

$\rho_{ac}(\tau)$

τ ———

KKF von
Signal c
und a

$\tau = 0$

FIG 3e

h

$\Delta$

$f_e(t)$

t ———

Testsignal
Würfel
2x3x2mm

FIG 3f

1

$\rho_{ae}(\tau)$

τ ———

KKF von
Signal e
und a

$\tau = 0$

FIG 3g

$\Delta$

$f_e(t)$

t ———

Testsignal
lateraler
Versatz 1mm

FIG 3h

1

$\rho_{ag}(\tau)$

τ ———

KKF von
Signal g
und a

$\tau = 0$

FIG 3i

Testsignal
Zylinder 2x2mm
(stehend)

FIG 3j

KKF von
Signal i
und a

$\tau = 0$

FIG 3k

Testsignal
Zylinder 2x2mm
(liegend)

FIG 3l

AKF von
Signal k
bez. auf a

$\tau = 0$

FIG 3m

Normsignal
Untergrund

FIG 3n

KKF von
Signal m
und a

$\tau = 0$

## FIG 4

## FIG 5a

## FIG 5b

## FIG 5c

## FIG 5d

FIG 6

## FIG 7a

**Energiedifferenz**

| | ngr | nmt | kl | pmt | pgr |
|---|---|---|---|---|---|
| **ngr** | n | n | n | n | n |
| **nmt** | n | ggf | ggf | ggf | n |
| **kl** | n | ggf | j | ggf | n |
| **pmt** | n | ggf | ggf | ggf | n |
| **pgr** | n | n | n | n | n |

*Asymmetrie* (vertical axis label)

**axialer Fehler**

## FIG 7b

**Energiedifferenz**

| | ngr | nmt | kl | pmt | pgr |
|---|---|---|---|---|---|
| **ngr** | j | j | ggf | j | j |
| **nmt** | j | ggf | ggf | ggf | j |
| **kl** | ggf | n | n | n | ggf |
| **pmt** | j | ggf | ggf | ggf | j |
| **pgr** | j | j | ggf | j | j |

*Asymmetrie* (vertical axis label)

**lateraler Fehler**

16